(19) Europäisches Patentamt
European Patent Office
Office européen des brevets

(11) **EP 2 262 734 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(21) Anmeldenummer: **09726490.7**

(22) Anmeldetag: **30.03.2009**

(51) Int Cl.:
*C01C 3/02* (2006.01)    *B01J 12/00* (2006.01)
*B01J 19/24* (2006.01)

(86) Internationale Anmeldenummer:
**PCT/EP2009/053723**

(87) Internationale Veröffentlichungsnummer:
**WO 2009/121827 (08.10.2009 Gazette 2009/41)**

(54) **VERBESSERTES VERFAHREN ZUR HERSTELLUNG VON BLAUSÄURE DURCH KATALYTISCHE DEHYDRATISIERUNG VON GASFÖRMIGEM FORMAMID - DIREKTHEIZUNG**

IMPROVED METHOD FOR PRODUCING HYDROGEN CYANIDE THROUGH CATALYTIC DEHYDRATION OF GASEOUS FORMAMIDE DIRECT HEATING

PROCÉDÉ AMÉLIORÉ DE FABRICATION D'ACIDE CYANHYDRIQUE PAR DÉSHYDRATATION CATALYTIQUE DE FORMAMIDE GAZEUX ET CHAUFFAGE DIRECT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **31.03.2008 EP 08153830**

(43) Veröffentlichungstag der Anmeldung:
**22.12.2010 Patentblatt 2010/51**

(73) Patentinhaber: **BASF SE**
**67056 Ludwigshafen (DE)**

(72) Erfinder:
• **BOEHLING, Ralf**
**64653 Lorsch (DE)**
• **DECKERS, Andreas**
**55234 Flomborn (DE)**
• **GRITSCH, Achim**
**70197 Stuttgart (DE)**
• **KOTREL, Stefan**
**Bedminster**
**New Jersey 07921 (US)**

(56) Entgegenhaltungen:
DE-A1-102005 051 637    DE-B- 1 000 796
US-A- 1 675 366    US-A- 2 042 451

**Beschreibung**

Die vorliegende Erfindung betrifft ein Verfahren zur Herstellung von Blausäure durch katalytische Dehydratisierung von gasförmigem Formamid, wobei die Dehydratisierung von Formamid mit einer exothermen Reaktion gekoppelt wird, indem der bei der Dehydratisierung eingesetzte Reaktor zwei getrennte Fluidwege umfasst, die durch eine gemeinsame Reaktorwand getrennt sind, wobei ein Fluidweg für die Dehydratisierung von Formamid vorgesehen ist und der zweite Fluidweg für die exotherme Reaktion vorgesehen ist.

Blausäure ist eine wichtige Grundchemikalie, die als Ausgangsprodukt zum Beispiel in zahlreichen organischen Synthesen wie der Herstellung von Adiponitril, Methacrylsäureestern, Methionin und Komplexbildnern (NTA, EDTA) dient. Darüber hinaus wird Blausäure für die Herstellung von Alkalicyaniden benötigt, die im Bergbau und in der metallurgischen Industrie eingesetzt werden.

Die größte Menge an Blausäure wird durch Umsetzung von Methan (Erdgas) und Ammoniak produziert. In dem so genannten Andrussow-Prozess wird simultan Luftsauerstoff zugegeben. Auf diese Weise verläuft die Herstellung von Blausäure autotherm. Im Gegensatz dazu wird bei dem so genannten BMA-Verfahren der Degussa AG sauerstofffrei gearbeitet. Die endotherme katalytische Umsetzung von Methan mit Ammoniak wird daher in dem BMA-Verfahren extern mit einem Heizmedium (Methan oder $H_2$) betrieben. Nachteilig bei den vorstehend genannten Verfahren ist der hohe Zwangsanfall von Ammoniumsulfat, da die Umsetzung von Methan ökonomisch nur mit einem $NH_3$-Überschuss gelingt. Das nicht umgesetzte Ammoniak wird mit Schwefelsäure aus dem Rohprozessgas ausgewaschen.

Ein weiteres wichtiges Verfahren zur Herstellung von Blausäure ist der so genannte SOHIO-Prozess. Bei der Ammon-Oxidation von Propen/Propan zu Acrylnitril entstehen ca. 10 % (bezogen auf Propen/Propan) Blausäure als Nebenprodukt.

Ein weiteres wichtiges Verfahren zur industriellen Herstellung von Blausäure ist die endotherme thermische Dehydratisierung von Formamid im Vakuum, die nach der folgenden Gleichung (I) abläuft:

$$HCONH_2 \rightarrow HCN + H_2O \qquad (I)$$

Diese Umsetzung ist von der Zersetzung des Formamids gemäß folgender Gleichung (II) unter Bildung von Ammoniak und Kohlenmonoxid begleitet:

$$HCONH_2 \rightarrow NH_3 + CO \qquad (II)$$

Der entstehende Ammoniak wird mit Schwefelsäure aus dem Rohgas ausgewaschen. Aufgrund der hohen Selektivität fällt jedoch nur sehr wenig Ammoniumsulfat an.

Der gebildete Ammoniak katalysiert die Polymerisation der gewünschten Blausäure und führt somit zu einer Beeinträchtigung der Qualität der Blausäure und einer Verminderung der Ausbeute an der gewünschten Blausäure.

Die Polymerisation von Blausäure und die damit verbundene Russbildung kann durch Zugabe von geringen Mengen Sauerstoff in Form von Luft, wie in EP-A 0 209 039 offenbart ist, unterdrückt werden. In EP-A 0 209 039 ist ein Verfahren zur thermolytischen Spaltung von Formamid an hochgesinterten Aluminiumoxid- oder Aluminiumoxid-Siliziumoxid-Formkörpern oder an hochtemperatur-korrosionsfesten Chrom-Nickel-Edelstahl-Formkörpern offenbart. Gemäß den Beispielen wird die Spaltung in Einrohrreaktoren durchgeführt, die mit dem vorstehend genannten Katalysator gefüllt sind und von außen mit einem Salzbad beheizt werden.

US 2,042,451 betrifft ein Verfahren zur Dehydratisierung von Formamid zur Herstellung von Blausäure, wobei als Katalysator eine geheizte Oberfläche eingesetzt wird, die von einer dünnen katalytisch aktiven Oxidschicht überzogen ist. Als Material für die beheizte Oberfläche wird Messing oder Eisen eingesetzt und als katalytisch aktive Oxidschicht dienen Aluminiumoxid, Manganoxid, Chromoxid oder Zinnoxid. Gemäß der Beschreibung in US 2,042,451 ist kein Teil des zu zersetzenden Formamidgases mehr als einen halben Inch von der katalytischen Oberfläche entfernt. Zur Durchführung der endothermen Formamidzersetzung wird gemäß US 2,042,451 ein Ofen eingesetzt.

DE-A 1 000 796 betrifft ein Verfahren zur Spaltung von Formamiddampf, wobei einem Temperaturgefälle innerhalb des Reaktionsraums dadurch Rechnung getragen wird, dass die Spaltung an stückigen oder kömigen hochgebrannten Eisenoxid-haltigen Silikaten oder Spinellen in einem Spaltungsraum erfolgt, dessen Wandung eine niedrigere katalytische Aktivität besitzt als die Katalysatoren im Spaltungsraum. Die Wandung besteht z. B. aus Edelstahl, der insbesondere ca. 84 % Eisen und 16 % Chrom enthält. Der Spaltungsraum wird aus von außen beheizten Röhren gebildet.

In WO 2004/050587 ist ein Verfahren zur Herstellung von Blausäure aus Formamid offenbart, wobei die Spaltung in leeren Metall-Rohren, die eine innere Reaktoroberfläche aus einem Stahl enthaltend Eisen sowie Chrom und Nickel aufweisen, durchgeführt wird. Mit dem Verfahren werden auch dann hohe Blausäure-Selektivitäten erzielt, wenn nur ein geringes Vakuum angelegt wird. Das Verfahren kann bei Drücken bis zu 300 mbar durchgeführt werden. Gemäß den Beispielen wird die Dehydratisierung in einem von außen elektrisch beheizten Reaktionsrohr durchgeführt.

US 1,675,366 beschreibt ein Verfahren zur Herstellung von Blausäure durch katalytische Dehydratisierung von gasförmigem Formamid in einem Rohrbündelreaktor, dessen Messingröhren bei der Dehydratisierungsreaktion katalytisch wirken. Die Heizung kann beispielsweise durch direkte Verbrennung erfolgen; die Möglichkeit einer katalytischen Verbrennung wird nicht beschrieben.

Zur Bereitstellung der zur Dehydratisierung des Formamids notwendigen hohen Temperaturen werden die Reaktoren gemäß dem Stand der Technik üblicherweise von außen geheizt, häufig mit Wälzgas, das mittels Rauchgas aufgeheizt wird. Durch den damit verbundenen schlechten Wärmedurchgang auf der Heizgasseite in Kombination mit der zur Spaltung (Dehydratisierung) benötigten erheblichen Wärmemenge werden hohe Wärmetauscheroberflächen zur Einkopplung der zur Dehydratisierung von Formamid benötigten Wärme benötigt. Der Dehydratisierungsteil (Reaktionsteil) stellt daher aufgrund der großen Wärmetauscheroberflächen der Reaktoren und des Wälzgaskreislaufs mit Rauchgaserzeugung einen erheblichen Teil der Investitionskosten bei dem Bau einer Anlage zur Herstellung von Blausäure durch Dehydratisierung von Formamid dar.

Des Weiteren ist es wünschenswert, kleine Produktionseinheiten zur Herstellung von Blausäure bereitzustellen, um den Transport von Blausäure oder daraus hergestelltem Alkalicyanid zu vermeiden (On-Demand-Produktion). Dabei sind große Reaktoren mit Wälzgaskreisläufen hinderlich.

Aufgabe der vorliegenden Erfindung ist daher die Bereitstellung eines Verfahrens zur Herstellung von Blausäure, das in kostengünstigen, kompakten Systemen mit schneller An- und Abfahrdynamik und einer effizienten Wärmeeinkopplung durchgeführt werden kann, so dass die On-Demand-Produktion von Blausäure ermöglicht wird. Das Verfahren soll eine hohe Selektivität zu der gewünschten Blausäure aufweisen und unter Verzicht auf Wälzgas betrieben werden.

Die Aufgabe wird durch ein Verfahren zur Herstellung von Blausäure durch katalytische Dehydratisierung von gasförmigem Formamid bei Temperaturen von 350 bis 650°C in einem Reaktor gelöst, wobei die Dehydratisierung von Formamid mit einer exothermen Reaktion gekoppelt wird, indem der Reaktor zwei getrennte Fluidwege umfasst, die durch eine gemeinsame Reaktorwand getrennt sind, wobei ein Fluidweg für die Dehydratisierung von Formamid vorgesehen ist und der zweite Fluidweg für die exotherme Reaktion vorgesehen ist und die gemeinsame Reaktorwand aus einem Material mit einer spezifischen Wärmeleitfähigkeit $\lambda$ von mindestens 10 W/(mK), bevorzugt mindestens 15 W/(mK), besonders bevorzugt 20 W/(mK) aufgebaut ist.

Das erfindungsgemäße Verfahren ist dann dadurch gekennzeichnet, dass die exotherme Reaktion eine katalytische Verbrennung brennbarer Gase unter Zuführung von Sauerstoff ist.

$\lambda$ von mindestens 10 W/(mK), bevorzugt mindestens 15 W/(mK), besonders bevorzugt 20 W/(mK) aufgebaut ist.

Unter einer Kopplung der Dehydratisierung von Formamid mit einer exothermen Reaktion wird im Sinne der vorliegenden Anmeldung eine energetische Kopplung hinsichtlich des Wärmeaustausches verstanden. Durch die Kopplung der endothermen Dehydratisierung von Formamid mit einer exothermen Reaktion kann eine deutliche Reduktion der benötigten Wärmetauscherfläche und ein Verzicht auf Wälzgas erzielt werden. Durch die endotherme Dehydratisierung von Formamid und die exotherme Reaktion trennende gemeinsame Reaktorwand mit einer spezifischen Wärmeleitfähigkeit von mindestens 10 W/(mK), ist eine effiziente Wärmekopplung zwischen der exothermen Reaktion und der endothermen Dehydratisierung von Formamid möglich.

Auf diese Weise ist es möglich, kleine Produktionseinheiten zur Blausäureproduktion bereitzustellen, wodurch die Investitionskosten gesenkt werden können und eine On-Demand-Produktion ermöglicht wird.

Gegenüber einer Einkopplung der Wärme durch Wälzgas, wie sie im Stand der Technik durchgeführt wird, vermindert sich bei dem erfindungsgemäßen Verfahren die Gasbelastung auf der Heizseite um ein Mehrfaches. Bei gleichem Druckverlust kann daher der zur Dehydratisierung von Formamid eingesetzte Reaktor (Zersetzer) wesentlich kompakter gebaut werden. Zusätzlich entfallen der üblicherweise eingesetzte Wälzgasverdichter sowie die Wälzgaserzeugung. Gegebenenfalls kann in dem erfindungsgemäßen Verfahren ein Gas/Gas-Wärmetauscher zur Brennluftvorerwärmung und Wärmerückgewinnung eingesetzt werden.

Bei einer Kopplung der endothermen Dehydratisierung von Formamid mit einer exothermen Reaktion kann es zu Zünd-Löschvorgängen im Reaktor kommen, d. h., wenn die Wärme der exothermen Reaktion auf der Heizseite nicht ausreichend durch die Dehydratisierung von Formamid auf der Reaktionsseite abgeführt wird, können sich so genannte Hot-Spots sowie hohe Temperaturgradienten in dem Reaktor ausbilden. Neben Selektivitäts- und Umsatzeinbußen durch solche Hot-Spots kann es des Weiteren zu einer thermischen Zerstörung des Reaktors im Bereich der Hot-Spots kommen. Durch den erfindungsgemäßen Einsatz einer Reaktorwand, die die exotherme Reaktion von der Dehydratisierung des Formamids trennt kann die Wärme der exothermen Reaktion durch die Wärmeleitung der Reaktorwand verteilt werden, so dass die Ausbildung von Hot-Spots bzw. die Ausbildung hoher Temperaturgradienten in dem Reaktor vermieden werden. Zur Vermeidung von Hot-Spots ist neben der hinreichenden Wärmeleitung des Reaktormaterials auch die Wahl einer geeigneten Dimensionierung der Kanallänge und Plattendicke notwendig. Hierbei führen kürzere Kanäle und dickere Platten zu geringeren Hot-Spots.

Eine verbesserte Wärmekopplung und Verteilung der Reaktionswärme kann erfindungsgemäß erzielt werden durch:

- verbesserten Wärmeübergang zwischen Gas und Wandmaterial
- Wandkatalytische Reaktion: Erzeugung/Verbrauch der Wärme an der Wand
- Verteilung der Reaktionswärme durch hohen Wandmaterialanteil und spezifischen Wärmeleitfähigkeit von mindestens 10 W/(mK).

Die Kopplung von endothermen Reaktionen mit exothermen Reaktionen ist im Stand der Technik bereits bekannt. In einem Verfahren zur Herstellung von Blausäure wurde eine solche Kopplung von exothermen und endothermen Reaktionen jedoch bisher nicht erwähnt.

EP 0 967 005 A2 betrifft einen Reaktor zur Wasserdampfreformierung eines Kohlenwasserstoff- oder Kohlenwasserstoffderivat-Ausgangsstoffs wie Methanol bei gleichzeitiger Durchführung einer katalytischen Oxidation des Ausgangsstoffs zur Bereitstellung von für die Reformierungsreaktion benötigter Wärme. Der gemäß EP 0 967 005 A2 eingesetzte Reaktor umfasst eine Oxidationsstufe zur Durchführung der Oxidation unter Zufuhr des Ausgangsstoffs und eines sauerstoffhaltigen Gases sowie eine der Oxidationsstufe nachgeschaltete Reformerstufe zur Durchführung der Wasserdampfreformierungsreaktion, wobei die Reformerstufe mit der Oxidationsstufe in Wärmeübertragungsverbindung steht. Der Reaktor gemäß EP 0 967 005 A2 soll insbesondere zur Wasserstoffgewinnung für Brennstoffzellenbetriebene Kraftfahrzeuge dienen. Genaue Angaben, wie die Wärmeübertragungsverbindung zwischen der Reformerstufe und der Oxidationsstufe erfolgt, enthält EP 0 967 005 A2 nicht. Es wird lediglich erwähnt, dass die Reformerstufe mit der Oxidationsstufe über eine gasdichte Trennwand in Wärmeübertragungsverbindung steht. Bezüglich des Materials der gasdichten Trennwand enthält EP 0 967 005 A2 keine Angaben.

In EP 0 885 653 A2 ist ein kompakter Reaktor für katalysierte chemische Umsetzungen in gasförmiger und/ oder flüssiger Phase, die von zwei Stoffströmen im Gleich- oder Gegenstrom durchströmt werden, wobei ein sehr guter Wärmekontakt vom Katalysator sowie zwischen den beiden Strömen gewährleistet ist, offenbart. Gemäß EP 0 885 653 A2 besteht der Reaktor aus parallelen Strömungskanälen für die beiden Stoffströme, die durch ziehharmonikaartige Faltung einer Trennwand entstehen. In den so gebildeten Falten sind Wellenstrukturen so angebracht, dass durchgehende Strömungskanäle für die Fluidströme entstehen. Die Reaktorwände können mit einem Katalysator beschichtet sein. In EP 0 885 653 A2 wird jedoch nicht erwähnt, welche Materialien bzw. Katalysatoren in dem Reaktor eingesetzt werden.

In WO 01/32302 A1 ist eine Reaktorschaltung zur autothermen Kopplung von exo- und endothermen Reaktionen mit separierter Führung der beiden Reaktionsströme offenbart, umfassend Wärmetauscherabschnitte zwischen allen zugeführten Eduktgasen und allen heißen Produktgasen sowie einen Reaktionsbereich, in dem die exothermen und die endothermen Reaktionen im unmittelbaren Wärmeaustausch zueinander ablaufen. Bezüglich der eingesetzten Materialien, die den Wärmetausch gemäß WO 01/32302 ermöglichen, enthält WO 01/32302 A1 keine Angaben.

Wie vorstehend bereits erwähnt, betrifft keines der vorstehend genannten Dokumente ein Verfahren zur Herstellung von Blausäure. Des Weiteren geht aus keinem der vorstehend genannten Dokumente hervor, dass die Bildung hoher Temperaturgradienten im Reaktor sowie die Bildung von Hot-Spots dadurch vermieden werden kann, dass die Wärmeübertragung in axialer Richtung über die gemeinsame Reaktorwand erfolgt, die eine spezifische Wärmeleitfähigkeit $\lambda$ von mindestens 10 W/(mK) aufweist.

Bei der exothermen Reaktion handelt es sich gemäß dem erfindungsgemäßen Verfahren um eine katalytische Verbrennung brennbarer Gase (Brenngase) unter Zuführung von Sauerstoff, bevorzugt Luftsauerstoff. Als brennbare Gase sind grundsätzlich alle für die Rauchgaserzeugung verwendeten Gasgemische und Gase einsetzbar. Üblicherweise werden als brennbare Gase Kohlenwasserstoffe oder Kohlenwasserstoff enthaltende Gemische eingesetzt. Geeignete Kohlenwasserstoffe sind insbesondere Methan, Ethan, Propan, Butan, Pentan sowie Gemische aus diesen Gasen bzw. Gemische, die einen oder mehrere der genannten Kohlenwasserstoffe sowie weitere Gase enthalten. Geeignete Brenngase sind dem Fachmann bekannt.

Die Verbrennung der brennbaren Gase (Brenngase) erfolgt in Anwesenheit eines Katalysators. Geeignete Katalysatoren sind dem Fachmann ebenfalls bekannt. Beispielsweise können Edelmetalle und Legierungen der Gruppe 8B und 1 B, wie Pt, Pd, Ag und Au eingesetzt werden. Auch Oxide, wie z.B. $MgO$, $CoO$, $MoO_3$, $NiO$, $ZnO$, $Cr_2O_3$, $WO_3$, $SnO$, $CuO/Cu_2O$, $MnO_2$ oder $V_2O_5$ verwendet werden. Auch Mischoxide wie z.B. $CuO$-$ZnO$-$Al_2O_3$, $CoO$-$MgO$, $CoO$-$La_2O_3$, $La_2CuO_4$, $Nd_2CuO_4$, $Co$-$ZnONiO$-$MoO_3$, Perowskite wie $LaMnO_3$, $CoTiO_3$, $LaTiO_3$, $CoNiO_3$ und Spinelle wie $CuAl_2O_4$, $MgAl_2O_4$, $(Cu, Zn)Al_2O_4$, $(Cu, Zn, Ba)Al_2O_4$, $(Cu, Zn, Mg)Al_2O_2$, $(Cu, Zn, Va) Al_2O_4$ oder $LaNiO_4$ sind geeignet. Es ist möglich, die Katalysatoren in Form von Einbauten oder Schüttungen in den Teil des Reaktors zu geben, worin die katalytische Verbrennung erfolgt, d. h. in dem für die exotherme Reaktion vorgesehenen Fluidweg. Des Weiteren ist es alternativ oder gemeinsam mit den Einbauten oder Schüttungen möglich, dass die mit dem brennbaren Gas in Kontakt stehende Seite der Reaktorwand eine katalytisch wirkende Beschichtung aufweist. Besonders bevorzugt sind Varianten ohne Einbauten oder Schüttungen mit beschichteten Wänden. Diese Beschichtung ist im Allgemeinen aus den vorstehend genannten Katalysatormaterialien aufgebaut. Verfahren zur Aufbringung der Beschichtung sind dem Fachmann bekannt. Üblicherweise weist die katalytisch wirkende Beschichtung eine Dicke von im Allgemeinen 0,01 bis 200μm, bevorzugt 0,1 bis 100μm, besonders bevorzugt 0,5 bis 70μm auf. Die Dicke der katalytisch wirkenden Beschichtung wird im Allgemeinen so gewählt, dass die spezifische Wärmeleitfähigkeit der beschichteten Reaktorwand nicht wesentlich beeinträchtigt wird.

Besonders bevorzugt wird als Katalysator in der katalytischen Verbrennung brennbarer Gase eine katalytisch wirkende Beschichtung der Reaktorwand (ohne weitere Einbauten bzw. Schüttungen) eingesetzt, die besonders bevorzugt ausgewählt ist aus der Gruppe bestehend aus den Metallen der Perioden-Gruppe 1b und 8b oder der Klasse der gemischten Oxide, besonders den Perowskiten.

Der für die katalytische Verbrennung erforderliche Sauerstoff kann dem brennbaren Gas direkt bei Einlass des brennbaren Gases in den Reaktor vollständig zugemischt werden. Es ist jedoch ebenfalls möglich, lediglich einen Teil eines Reaktionspartners, entweder Sauerstoff oder brennbares Gas, bei Einlass in den Reaktor zuzumischen und weitere Mengen des Reaktionspartners an mehreren Stellen entlang des Fluidwegs dem anderen Reaktionspartner zuzuführen. Dabei sollte der Teil des Reaktionspartners, der zu Beginn zugemischt wird, geringer sein als die Menge des Reaktionspartners, der zur vollständigen Verbrennung der brennbaren Gase erforderlich ist. Durch die Zuführung eines Reaktionspartners der Verbrennung an mehreren Stellen entlang des Fluidwegs wird erreicht, dass nicht die gesamte Menge des brennbaren Gases direkt zu Beginn des Fluidwegs verbrannt wird, sondern eine Verbrennung der brennbaren Gase entlang des gesamten Fluidwegs erfolgt. Dadurch kann eine noch gleichmäßigere Verteilung der bei der exothermen Reaktion entstehenden Wärme erreicht werden.

Die endotherme Dehydratisierung von gasförmigem Formamid erfolgt bei Temperaturen von 350 bis 650°C, bevorzugt 450 bis 550°C, besonders bevorzugt 500 bis 550°C. Werden höhere Temperaturen gewählt, ist mit verschlechterten Selektivitäten zu rechnen.

Der Druck beträgt bei der Dehydratisierung von Formamid im Allgemeinen 100 mbar bis 4 bar, bevorzugt 300 mbar bis 3 bar.

Vorstehend und im Folgenden ist unter dem Druck im Sinne der vorliegenden Anmeldung der Absolutdruck zu verstehen.

Die optimale Verweilzeit des Formamid-Gasstroms in dem erfindungsgemäßen Verfahren ergibt sich aus der längenspezifischen Formamid-Belastung, die im allgemeinen 0,02 bis 0,4 kg/(mh), bevorzugt 0,05 bis 0,3 kg/(mh), besonders bevorzugt 0,08 bis 0,2 kg/(mh) im Bereich laminarer Strömung beträgt. Somit hängt die optimale Verweilzeit vom Rohrdurchmesser ab. Geringe Rohrdurchmesser ergeben daher kürzere optimale Verweilzeiten. Wie vorstehend erwähnt, gilt der vorstehend angegebene Wert der längenspezifischen Formamid-Belastung für den Bereich laminarer Strömung. Bei turbulenter Strömung kann die Belastung höher sein.

Bevorzugt wird das erfindungsgemäße Verfahren in Anwesenheit von Sauerstoff, bevorzugt Luftsauerstoff, durchgeführt. Die Mengen an Sauerstoff, bevorzugt Luftsauerstoff, betragen im Allgemeinen > 0 bis 10 mol-%, bezogen auf die eingesetzte Formamidmenge, bevorzugt 0,1 bis 10 mol-%, besonders bevorzugt 0,5 bis 3 mol-%. Dazu kann gasförmiges Formamid (Formamid-Dampf) vor der Zuführung in den Rohrreaktor bzw. Plattenreaktor mit Sauerstoff, bevorzugt Luftsauerstoff, versetzt werden.

Die erfindungsgemäße katalytische Dehydratisierung kann an jedem für die katalytische Dehydratisierung von Formamid bekannten Katalysator durchgeführt werden. Geeignete Katalysatoren für die Dehydratisierung von Formamid sind dem Fachmann bekannt. Beispielsweise kann die erfindungsgemäße katalytische Dehydratisierung in Anwesenheit von Formkörpern als Katalysatoren durchgeführt werden, wobei die Formkörper ausgewählt sind aus der Gruppe bestehend aus hochgesinterten Formkörpern, aufgebaut aus Aluminiumoxid und gegebenenfalls Siliziumoxid, bevorzugt aus 50 bis 100 Gew.-% Aluminiumoxid und 0 bis 50 Gew.-% Siliziumoxid, besonders bevorzugt aus 85 bis 95 Gew.-% Aluminiumoxid und 5 bis 15 Gew.-% Siliziumoxid, und Chrom-Nickel-Edelstahl-Formkörpern, wie z. B. in EP-A 0 209 039 beschrieben. Des Weiteren kann es sich bei den für die erfindungsgemäße katalytische Dehydratisierung geeigneten Katalysatoren um Packungen aus Stahl oder Eisenoxid auf porösen Trägermaterialien, z. B. Aluminiumoxid, handeln. Geeignete Packungen sind z. B. in DE-A 101 38 553 beschrieben.

Werden Formkörper eingesetzt, so können als mögliche Formkörper sowohl geordnete als auch ungeordnete Formlinge eingesetzt werden, z. B. Raschid-Ringe, Pal-Ringe, Tabletten, Kugeln und ähnliche Formlinge. Wesentlich ist hierbei, dass die Packungen bei mäßigem Druckverlust guten Wärmeübergang ermöglichen. Die Größe bzw. Geometrie der verwendeten Formlinge richtet sich im Allgemeinen nach dem Innendurchmesser der mit diesen Formkörpern zu füllenden Reaktoren, bevorzugt Rohrreaktoren bzw. Plattenreaktoren.

Geeignete Packungen aus Stahl oder Eisenoxid sind im Allgemeinen geordnete Packungen. Bevorzugt handelt es sich bei den geordneten Packungen um statische Mischer. Durch den Einsatz der statischen Mischer kann ein einheitlicher Druck sowie ein hervorragender Wärmeübergang im Rohrreaktor bzw. Plattenreaktor erreicht werden. Die statischen Mischer können beliebige Geometrien aufweisen, wie sie dem Fachmann bekannt sind. Bevorzugte statische Mischer sind aus Blechen aufgebaut, wobei es sich um Lochbleche und/oder geformte Bleche handeln kann. Es können selbstverständlich ebenfalls geformte Lochbleche eingesetzt werden.

Geeignete Formkörper sind in EP-A 0 209 039 beschrieben und geeignete statische Mischer sind in DE-A 101 38 553 beschrieben.

Es ist des Weiteren möglich, dass die mit dem Formamid in Kontakt stehende Seite der Reaktorwand eine katalytisch wirkende Beschichtung aufweist. Diese Beschichtung kann alternativ oder gemeinsam mit einem der vorstehend genannten Katalysatoren vorliegen. Geeignete katalytisch wirkende Beschichtungen und deren Dicke sind dem Fachmann bekannt. Üblicherweise wird die Dicke der katalytisch wirkenden Beschichtung so gewählt, dass die spezifische Wärmeleitfähigkeit der beschichteten Reaktorwand nicht wesentlich beeinträchtigt wird.

Es wurde gefunden, dass eine gemäß dem Stand der Technik häufig in einem Reaktor zur Dehydratisierung von Formamid eingesetzte katalytisch aktive Reaktorwand aus Eisen oder Stahl in dem erfindungsgemäßen Verfahren aufgrund der geringen Wärmeleitfähigkeit des Eisens bzw. des Stahls nur geringe Kanallängen zulässt. Erfindungsgemäß ist die die Fluidwege (Fluidweg zur Dehydratisierung von Formamid und Fluidweg für eine exotherme Reaktion) trennende gemeinsame Reaktorwand für längere Kanalgeometrien aus einem Material ausgewählt aus der Gruppe bestehend aus Kupfer, Silber, Aluminium, Magnesium, Magnesiumoxid, Messing, Carbiden, insbesondere Siliziumcarbiden, Nitriden, insbesondere Aluminiumnitrid, Kohlenstoff, insbesondere in Form von Graphit oder Kohlenstoffnanoröhren (CNT), Silizium und oxidationsbeständigem siliziumfiltrierten Siliziumcarbid SiSiC aufgebaut.

Es wurde gefunden, dass eine hohe Wärmeleitfähigkeit der die Fluidwege trennenden gemeinsamen Reaktorwand für eine Kopplung der exothermen Reaktion mit der endothermen Dehydratisierung von Formamid günstig ist. Die vorstehend genannten Materialien weisen spezifische Wärmeleitfähigkeiten auf, die oberhalb 100 W/(mK) liegen. Ein weiterer wichtiger Faktor, um eine gute Wärmeleitfähigkeit und eine gleichmäßige Temperatur über den Fluidweg für die Dehydratisierung von Formamid und so einen stabilen Betrieb zu erzielen, ist neben der Wärmeleitfähigkeit des Materials der die Fluidwege trennenden gemeinsamen Reaktorwand die Dicke der gemeinsamen Reaktorwand. Üblicherweise beträgt die Dicke der gemeinsamen Reaktorwand 0,5 bis 10, bevorzugt 1 bis 6, besonders bevorzugt 1 bis 3 mm. Dabei führen dickere Platten im Allgemeinen zu einem zunehmenden Wärmefluss innerhalb des Reaktormaterials und zu einer gleichmäßigeren Temperatur über den Fluidweg für die Dehydratisierung von Formamid und damit zu einem stabileren Betriebspunkt. Sehr hohe Dicken führen nur noch zu einer geringfügigen Verbesserung des Wärmeflusses erhöhen jedoch Materialbedarf und Baugröße.

Bei dem in dem erfindungsgemäßen Verfahren eingesetzten Reaktor handelt es sich im Allgemeinen um einen Mehrrohrreaktor bzw. Plattenreaktor, der mindestens zwei getrennte Fluidwege aufweist, die durch eine gemeinsame Reaktorwand getrennt sind, wobei ein Fluidweg für die Dehydratisierung von Formamid vorgesehen ist und der zweite Fluidweg für die exotherme Reaktion vorgesehen ist.

Ein bevorzugter Reaktor ist ein Plattenreaktor, bei dem die einzelnen Platten vollflächig miteinander verbunden sind, aufgebaut aus mindestens zwei parallelen, übereinander angeordneten Lagen A und B, wobei die Lage A mindestens zwei parallel zueinander angeordnete Reaktionskanäle aufweist, in denen die katalytische Dehydratisierung erfolgt, und die Lage B mindestens zwei parallel zueinander angeordnete Kanäle aufweist, in denen die exotherme Reaktion erfolgt.

Als Lage wird im Sinne der vorliegenden Anmeldung eine weitgehend zweidimensionale, flächige Baueinheit verstanden, d. h. eine Baueinheit, deren Dicke im Verhältnis zu ihrer Fläche vernachlässigbar gering ist. Bevorzugt handelt es sich bei der Lage um eine im Wesentlichen ebene Platte, die zur Ausbildung der vorstehend genannten Kanäle strukturiert ist. Geeignete Dicken der Lage entsprechen den vorstehend genannten Dicken der gemeinsamen Reaktorwand.

Um eine möglichst gute Wärmeverteilung und eine gleichmäßige Temperatur über den Fluidweg für die Dehydratisierung von Formamid zu erzielen und so einen stabilen Betrieb zu erhalten, ist es wünschenswert, dass der vorstehend erwähnte Reaktor möglichst kurze Kantenlängen aufweist. Geeignete Kantenlängen betragen im Allgemeinen 2 bis 100, bevorzugt 3 bis 70, besonders bevorzugt 6 bis 40 cm. Die optimale Kantenlänge hängt dabei von der Wärmeleitfähigkeit des eingesetzten Materials ab. Unter Kantenlängen ist im Sinne der vorliegenden Anmeldung die Ausdehnung der vorstehend erwähnten Platten in zwei Dimensionen in einer Ebene zu verstehen (wobei die Ausdehnung in einer Dimension jeweils eine Kantenlänge bedeutet.

Üblicherweise weist der vorstehend genannte Rohrreaktor bzw. Plattenreaktor 2 bis 1000, bevorzugt 40 bis 500, alternierend übereinander angeordnete Lagen A, in denen die katalytische Dehydratisierung erfolgt, und Lagen B, in denen die exotherme Reaktion erfolgt, dergestalt auf, dass jede einzelne Lage eine Vielzahl, bevorzugt 10 bis 500, besonders bevorzugt 20 bis 200 von parallel zueinander angeordneten Kanälen aufweist, die von einer Seite der Lage bis zur gegenüberliegenden Seite derselben einen durchgehenden Strömungsweg ausbilden.

Die jeweiligen Lagen A werden - wie vorstehend erwähnt - von dem zu dehydratisierenden gasförmigen Formamid durchströmt und die Lagen B werden üblicherweise von einem Brenngas durchströmt.

Der Fluidweg für die Dehydratisierung von Formamid und der Fluidweg für die exotherme Reaktion weisen in einer bevorzugten Ausführungsform jeweils eine Länge von 2 bis 100, bevorzugt 3 bis 70, besonders bevorzugt 6 bis 40 cm auf.

Der mittlere hydraulische Durchmesser der Reaktionskanäle der Lagen A beträgt in dem vorstehend erwähnten bevorzugt eingesetzten Reaktor im Allgemeinen 0,5 bis 6 mm, bevorzugt > 1 bis 4 mm, besonders bevorzugt > 1 bis 3 mm. Die Kanäle der Lagen B weisen im Allgemeinen einen mittleren hydraulischen Durchmesser von < 4 mm, bevorzugt 0,2 bis 3 mm, besonders bevorzugt 0,5 bis 2 mm auf.

Es wurde gefunden, dass bei gleicher Länge des Reaktionsrohres des Rohrreaktors bzw. Plattenreaktors und gleicher Formamidbelastung kleinere Durchmesser (Kanalgeometrien) zu keiner wesentlichen Verringerung des Umsatzes zu der gewünschten Blausäure führen, trotz der wesentlich höheren Oberflächenbelastung bei kleinen Kanalgeometrien. Des Weiteren wurde gefunden, dass eine Verstopfung der Reaktionsrohre des Rohrreaktors bzw. Plattenreaktors durch Ablagerungen durch eine Dimensionierung der Reaktionsrohres im Millibereich von im Allgemeinen 0,5 bis 6 mm, bevorzugt > 1 bis 4 mm, besonders bevorzugt > 1 bis 3 mm vermieden werden kann, so dass lange Standzeiten des milli/mikrostrukturierten Rohrreaktors bzw. Plattenreaktors erzielt werden können.

Bei dem hydraulischen Durchmesser $d_h$ handelt es sich um eine theoretische Größe, mit der Berechnungen an Rohren oder Kanälen mit nicht kreisförmigem Querschnitt durchgeführt werden können. Der hydraulische Durchmesser ist der Quotient aus dem vierfachen Strömungsquerschnitt A und dem vom Fluid benetzen Umfang U eines Messquerschnitts:

$$d_h = 4\ A/U$$

Der mittlere hydraulische Durchmesser bezieht sich jeweils auf einen Reaktionskanal des bevorzugt eingesetzten Reaktors.

Wie bereits vorstehend erwähnt, sind alternierend zu den von gasförmigem Formamid durchströmten Lagen A Lagen B angeordnet, denen auf der einen Seite der jeweiligen Lage die für die exotherme Reaktion erforderliche Verbindung und Sauerstoff, bevorzugt Luftsauerstoff (gegebenenfalls ein Teil eines Reaktionspartners, wobei weitere Anteile an mehreren Stellen entlang des Fluidweges zugeführt werden) zugeführt und auf der anderen Seite der jeweiligen Lage das bei der exothermen Reaktion entstandene Gemisch abgezogen wird. Unter einer alternierenden Anordnung der Lagen A und B ist im Sinne der vorliegenden Anmeldung zu verstehen, dass entweder auf jede Lage A jeweils eine Lage B folgt, oder dass auf jeweils zwei aufeinander folgende Lagen A eine Lage B folgt oder dass auf jeweils eine Läge A zwei aufeinander folgende Lagen B folgen. Es sollte in jedem Fall sichergestellt werden, dass die Lagen A mindestens eine gemeinsame Reaktorwand mit den Lagen B aufweisen, um die erfindungsgemäße Wärmekopplung zu ermöglichen.

Der Druckverlust wird in dem erfindungsgemäßen Dehydratisierungsverfahren so eingestellt, dass er im Allgemeinen < 2 bar, bevorzugt 0,02 bis 1 bar beträgt.

Die Kanäle der Lagen A und B in dem bevorzugt eingesetzten Reaktor können so angeordnet sein, dass sich eine Kreuz-, Gegen- oder Gleichstromführung ergibt. Des Weiteren sind beliebige Mischformen denkbar. Grundsätzlich ist in dem erfindungsgemäßen Verfahren eine Gleichstromführung bevorzugt, um eine möglichst gleichmäßige Temperaturverteilung über den Reaktor zu erzielen.

Üblicherweise ist in dem erfindungsgemäß bevorzugt eingesetzten Reaktor für die Kanäle der Lagen A an einem Ende der Lagen A eine Verteilereinrichtung für die Zuführung der Edukte (des gasförmigen Formamids) und am anderen Ende der Lagen A eine Sammeleinrichtung für das Reaktionsprodukt (Blausäure) vorgesehen. Dabei versorgt eine Verteilereinrichtung im Allgemeinen alle Lagen A. Des Weiteren ist im Allgemeinen eine Sammeleinrichtung für alle Lagen A vorgesehen. Üblicherweise bilden alle Lagen A ein durchgängiges System von Reaktionskanälen.

Im Allgemeinen ist auch für die Lagen B, in deren Kanälen die exotherme Reaktion erfolgt, jeweils eine Verteil- und Sammeleinrichtung entsprechend der Verteil- und Sammeleinrichtung betreffend die Lagen A vorgesehen. Es ist jedoch auch möglich, dass die Lagen B mehrere Verteileinrichtungen aufweisen, um eine verteilte Zugabe von einem Reaktionspartner der exothermen Reaktion an mehreren Stellen entlang des Fluidweges zu ermöglichen. Üblicherweise bilden alle Lagen B ein durchgängiges System von Kanälen, in denen die exotherme Reaktion erfolgt.

In einer Ausführungsform des bevorzugt eingesetzten Reaktors ist die Verteil- und Sammeleinrichtung jeweils als eine außerhalb des Stapels der Lagen A bzw. B angeordnete Kammer ausgebildet. Hierbei können die Wände der Kammer gerade oder beispielsweise halbkreisförmig gebogen sein. Wesentlich ist, dass die geometrische Form der Kammer geeignet ist, Strömung und Druckverlust so zu gestalten, dass eine gleichmäßige Durchströmung der Kanäle erreicht wird.

In einer weiteren Ausführungsform sind die Verteil- und Sammeleinrichtungen jeweils innerhalb eines Stapels der Lagen A bzw. B angeordnet, indem die parallel zueinander angeordneten Kanäle jeder Lage A bzw. jeder Lage B im Bereich jeder der beiden Enden der Lage jeweils einen, die parallel zueinander angeordneten Kanäle verbindenden Querkanal aufweisen und alle Querkanäle innerhalb eines Stapels der Lagen A bzw. B durch einen im Wesentlichen senkrecht zu dieser Ebene der Lagen A bzw. B angeordneten Sammelkanal verbunden sind. Auch in diesem Fall ist es wesentlich, dass die geometrische Form der Kammer geeignet ist, Strömung und Druckverlust so zu gestalten, dass eine gleichmäßige Durchströmung der Kanäle erreicht wird. Geeignete geometrische Formen der Kammer sind dem Fachmann bekannt.

Wie bereits vorstehend erwähnt, soll durch die beiden vorstehend genannten Ausführungsformen nicht ausgeschlossen werden, dass der zur Durchführung der exothermen Reaktion erforderliche Sauerstoff an mehreren Stellen entlang des Fluidwegs zugeführt werden kann.

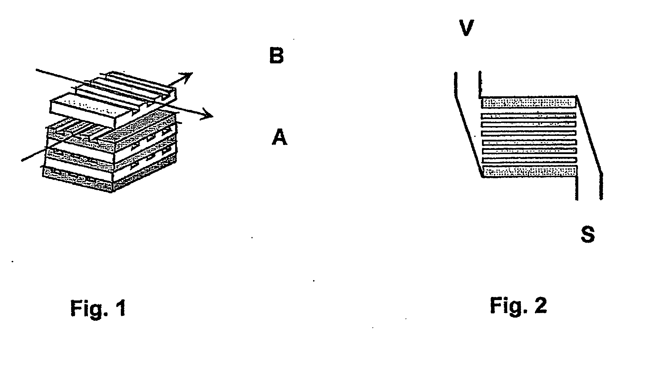

In Figur 1 ist ein schematischer dreidimensionaler Ausschnitt eines geeigneten Reaktors beispielhaft dargestellt, wobei in Figur 1 die Lagen A und B alternierend angeordnet sind, wobei auf jede Lage A eine Lage B folgt und die Anordnung der Lagen A und B so erfolgt, dass sich eine Kreuzstromführung ergibt.

In Figur 1 bedeuten:

A Formamid durchströmte Lagen A
B Lagen B, worin die exotherme Reaktion erfolgt

Die Pfeile geben jeweils die Strömungsrichtung des Formamids bzw. des zur Durchführung der exothermen Reaktion eingesetzten Mediums an.

In Figur 2 ist eine schematische Draufsicht einer Lage, wobei es sich um eine Lage A oder B handeln kann, beispielhaft dargestellt. Innerhalb der Lage ist eine Verteilereinrichtung V und eine Sammeleinrichtung S schematisch dargestellt.

In Figur 2 bedeuten:

V Verteilereinrichtung
S Sammeleinrichtung
K Kanäle

Die Herstellung des bevorzugt eingesetzten Reaktors kann nach dem Fachmann bekannten Verfahren erfolgen. Geeignete Verfahren sind z. B. in V. Hessel, H. Löwe, A. Müller, G. Kolb, Chemical Microprocess Engineering-Processing and Plants, Wiley-VCH, Weinheim, 2005, S. 385 bis 391 und W. Ehrfeld, V. Hessel, V. Haferkamp, Microreactors, Ullmann's Encyclopedia of Industrial Chemistry, Wiley-VCH, Weinheim, 1999, offenbart. Üblicherweise umfasst die Herstellung die Erzeugung einer Mikrostruktur in den einzelnen Lagen durch Bearbeitung von Platten aus für den Reaktor geeigneten Materialien, das Stapeln der Lagen, das Fügen der Lagen zum Zusammenbau des Reaktors und das Anbringen von Anschlüssen für die Zuleitung des gasförmigen Formamids bzw. die Ableitung der Blausäure und gegebenenfalls die Zu- und Ableitung der bei der exothermen Reaktion eingesetzten Edukte und entstehenden Produkte. In DE-A 10 2005 051 637 sind verschiedene Herstellungsverfahren für mikrostrukturierte Reaktoren beschrieben, die entsprechend zur Herstellung des vorstehend beschriebenen bevorzugten Reaktors angewendet werden können.

Das in dem erfindungsgemäßen Verfahren eingesetzte gasförmige Formamid wird durch Verdampfen von flüssigem Formamid erhalten. Geeignete Verfahren zum Verdampfen von flüssigem Formamid sind dem Fachmann bekannt und in dem in der Beschreibungseinleitung genannten Stand der Technik beschrieben.

Bevorzugt erfolgt das Verdampfen des flüssigen Formamids in einem Verdampfer bei Temperaturen von 200 bis 300°C, bevorzugt 210 bis 260°C, besonders bevorzugt 220 bis 240°C. Der Druck beträgt bei der Verdampfung des flüssigen Formamids üblicherweise 400 mbar bis 4 bar, bevorzugt 600 mbar bis 2 bar, besonders bevorzugt 800 mbar bis 1,4 bar.

In einer bevorzugten Ausführungsform wird die Verdampfung des flüssigen Formamids bei kurzen Verweilzeiten durchgeführt. Besonders bevorzugte Verweilzeiten betragen < 20 s, bevorzugt 10 s, jeweils bezogen auf das flüssige Formamid.

Aufgrund der sehr kurzen Verweilzeiten im Verdampfer kann das Formamid nahezu vollständig ohne Nebenprodukt-Bildung verdampft werden.

Die vorstehend genannten kurzen Verweilzeiten des Formamids im Verdampfer werden bevorzugt in mikrostrukturierten Apparaten erreicht. Geeignete mikrostrukturierte Apparate, die als Verdampfer eingesetzt werden können, sind z. B. in DE-A 101 32 370, WO 2005/016512 und WO 2006/108796 beschrieben.

Ein besonders bevorzugtes Verfahren zur Verdampfung von flüssigem Formamid sowie besonders bevorzugt eingesetzte Mikroverdampfer sind in der zeitgleich eingereichten Anmeldung mit dem Titel "Verbessertes Verfahren zur Herstellung von Blausäure durch katalytische Dehydratisierung von gasförmigem Formamid" - mit der europäischen Anmeldenummer 07 120 540.5 beschrieben, auf deren Offenbarung ausdrücklich Bezug genommen wird.

Durch den Einsatz von mikrostrukturierten Verdampfern in Kombination mit dem erfindungsgemäßen Verfahren können besonders kompakte und kostensparende Anlagen zur Herstellung von Blausäure aus Formamid bereitgestellt werden.

Das erfindungsgemäße Verfahren zur Herstellung von Blausäure liefert die gewünschte Blausäure in hohen Selektivitäten von im Allgemeinen > 90 %, bevorzugt > 95 %, so dass Ausbeuten von im Allgemeinen > 80 %, bevorzugt > 85 %, besonders bevorzugt > 88 % erreicht werden.

**Patentansprüche**

1. Verfahren zur Herstellung von Blausäure durch katalytische Dehydratisierung von gasförmigem Formamid bei Temperaturen von 350 bis 650°C in einem Reaktor, wobei die Dehydratisierung von Formamid mit einer exothermen Reaktion gekoppelt wird, indem der Reaktor zwei getrennte Fluidwege umfasst, die durch eine gemeinsame Reaktorwand getrennt sind, wobei ein Fluidweg für die Dehydratisierung von Formamid vorgesehen ist und der zweite Fluidweg für die exotherme Reaktion vorgesehen ist und die gemeinsame Reaktorwand aus einem Material mit einer spezifischen Wärmeleitfähigkeit $\lambda$ von mindestens 10 W/(mK) aufgebaut ist, **dadurch gekennzeichnet, dass** die exotherme Reaktion eine katalytische Verbrennung brennbarer Gase unter Zuführung von Sauerstoff ist.

2. Verfahren nach Anspruch 1, **dadurch gekennzeichnet, dass** die mit dem brennbaren Gas in Kontakt stehende Seite der gemeinsamen Reaktorwand eine katalytisch wirkende Beschichtung aufweist.

3. Verfahren nach Anspruch 1 oder 2, **dadurch gekennzeichnet, dass** die Beschichtung ausgewählt ist aus der Gruppe bestehend aus Edelmetallen der Gruppen 8B oder 1B, Legierungen enthaltend Metalle der Gruppen 8B oder/oder 1 B, Oxiden ausgewählt aus $MgO$, $CoO$, $MoO_3$, $NiO$, $ZnO$, $Cr_2O_3$, $WO_3$, $SnO$, $CuO/Cu_2O$, $MnO_2$ und $V_2O_5$, Mischoxiden ausgewählt aus $CuO\text{-}ZnO\text{-}Al_2O_3$, $CoO\text{-}MgO$, $CoO\text{-}La_2O_3$, $La_2CuO_4$, $Nd_2CuO_4$ und $Co\text{-}ZnONiO\text{-}MoO_3$, Perowskiten ausgewählt aus $LaMnO_3$, $CoTiO_3$, $LaTiO_3$ und $CoNiO_3$ und Spinellen ausgewählt aus $CuAl_2O_4$, $MgAl_2O_4$, $(Cu, Zn)Al_2O_4$, $(Cu, Zn, Ba)Al_2O_4$, $(Cu, Zn, Mg)Al_2O_2$, $(Cu, Zn, Va)\ Al_2O_4$ und $LaNiO_4$.

4. Verfahren nach einem der Ansprüche 1 bis 3, **dadurch gekennzeichnet, dass** der Sauerstoff dem brennbaren Gas bzw. das brennbare Gas dem Sauerstoff an mehreren Stellen entlang des Fluidwegs zugeführt wird.

5. Verfahren nach einem der Ansprüche 1 bis 4, **dadurch gekennzeichnet, dass** die katalytische Dehydratisierung bei einem Druck von 100 mbar bis 4 bar, bevorzugt 300 mbar bis 3 bar durchgeführt wird.

6. Verfahren nach einem der Ansprüche 1 bis 5, **dadurch gekennzeichnet, dass** die katalytische Dehydratisierung bei einer längenspezifischen Formamidbelastung von 0,02 bis 0,4 kg/(mh) im Bereich laminarer Strömung erfolgt.

7. Verfahren nach einem der Ansprüche 1 bis 6, **dadurch gekennzeichnet, dass** die katalytische Dehydratisierung in Anwesenheit von Sauerstoff erfolgt.

8. Verfahren nach einem der Ansprüche 1 bis 7, **dadurch gekennzeichnet, dass** die katalytische Dehydratisierung in Anwesenheit von Formkörpern, ausgewählt aus hoch gesinterten Formkörpern, aufgebaut aus Aluminiumoxid und gegebenenfalls Siliziumoxid und Chrom-Nickel-Edelstahl-Formkörpem oder in Anwesenheit von Packungen aus Stahl oder Eisenoxid auf porösen Trägermaterialien als Katalysatoren erfolgt und/oder die mit dem Formamid in Kontakt stehende Seite der gemeinsamen Reaktorwand eine katalytisch wirkende Beschichtung aufweist.

9. Verfahren nach einem der Ansprüche 1 bis 8, **dadurch gekennzeichnet, dass** die die Fluidwege trennende gemeinsame Reaktorwand aus einem Material ausgewählt aus der Gruppe bestehend aus Kupfer, Silber, Aluminium, Magnesium, Magnesiumoxid, Messing, Carbiden, insbesondere Siliziumcarbiden, Nitriden, insbesondere Aluminiumnitrid, Kohlenstoff, insbesondere in Form von Graphit oder Kohlenstoffnanoröhren (CNT), Silizium und oxidativnsbeständigem siliziumfiltrierten Siliziumcarbid SiSiC , aufgebaut ist.

10. Verfahren nach einem der Ansprüche 1 bis 9, **dadurch gekennzeichnet, dass** der Reaktor ein Rohrreaktor bzw. Plattenreaktor aufgebaut aus mindestens zwei parallelen, übereinander angeordneten Lagen A und B ist, wobei die Lage A mindestens zwei parallel zueinander angeordnete Reaktionskanäle aufweist, in denen die katalytische Dehydratisierung erfolgt, und die Lage B mindestens zwei parallel zueinander angeordnete Kanäle aufweist, in denen die exotherme Reaktion erfolgt.

11. Verfahren nach einem der Ansprüche 1 bis 10, **dadurch gekennzeichnet, dass** die Reaktionskanäle der Lagen A einen mittleren hydraulischen Durchmesser von 1 bis 6 mm, bevorzugt > 1 bis 4 mm, besonders bevorzugt > 1 bis 3 mm aufweisen und die Kanäle der Lagen B einen mittleren hydraulischen Durchmesser von < 4 mm, bevorzugt 0,2 bis 3 mm, besonders bevorzugt 0,5 bis 2 mm aufweisen.

12. Verfahren nach einem der Ansprüche 1 bis 11, **dadurch gekennzeichnet, dass** der Fluidweg für die Dehydratisierung von Formamid und der Fluidweg für die exotherme Reaktion jeweils eine Länge 2 bis 100, bevorzugt 3 bis 70, besonders bevorzugt 6 bis 40 cm aufweisen.

**EP 2 262 734 B1**

**Claims**

1. A process for preparing hydrocyanic acid by catalytic dehydration of gaseous formamide at temperatures of from 350 to 650°C in a reactor, with the dehydration of formamide being coupled with an exothermic reaction by the reactor comprising two separate fluid paths which are separated by a common reactor wall, with one fluid path being provided for the dehydration of formamide and the second fluid path being provided for the exothermic reaction and the common reactor wall being made of a material having a specific thermal conductivity $\lambda$ of at least 10 W/(mK), wherein the exothermic reaction is a catalytic combustion of combustible gases with introduction of oxygen.

2. The process according to claim 1, wherein the side of the common reactor wall which is in contact with the combustible gas has a catalytically active coating.

3. The process according to claim 1 or 2, wherein the coating is selected from the group consisting of noble metals of groups 8B and 1B, alloys comprising metals of groups 8B and/or 1B, oxides selected from among MgO, CoO, $MoO_3$, NiO, ZnO, $Cr_2O_3$, $WO_3$, SnO, $CuO/Cu_2O$, $MnO_2$ and $V_2O_5$, mixed oxides selected from $CuO$-$ZnO$-$Al_2O_3$, CoO-MgO, $CoO$-$La_2O_3$, $La_2CuO_4$, $Nd_2CuO_4$ and $Co$-$ZnONiO$-$MoO_3$, perovskites selected from among $LaMnO_3$, $CoTiO_3$, $LaTiO_3$ and $CoNiO_3$ and spinels selected from among $CuAl_2O_4$, $MgAl_2O_4$, (Cu, Zn)$Al_2O_4$, (Cu, Zn, Ba)$Al_2O_4$, (Cu, Zn, Mg)$Al_2O_2$, (Cu, Zn, Va) $Al_2O_4$ and $LaNiO_4$.

4. The process according to any of claims 1 to 3, wherein the oxygen is introduced into the combustible gas or the combustible gas is introduced into the oxygen at a plurality of points along the fluid path.

5. The process according to any of claims 1 to 4, wherein the catalytic dehydration is carried out at a pressure of from 100 mbar to 4 bar, preferably from 300 mbar to 3 bar.

6. The process according to any of claims 1 to 5, wherein the catalytic dehydration is carried out at a length-specific space velocity of formamide of from 0.02 to 0.4 kg/(mh) in the region of laminar flow.

7. The process according to any of claims 1 to 6, wherein the catalytic dehydration is carried out in the presence of oxygen.

8. The process according to any of claims 1 to 7, wherein the catalytic dehydration is carried out in the presence of shaped bodies selected from among highly sintered shaped bodies made up of aluminum oxide and optionally silicon oxide and shaped chromium-nickel stainless steel bodies or in the presence of packings composed of steel or iron oxide on porous support materials as catalysts and/or the side of the common reactor wall which is in contact with the formamide has a catalytically active coating.

9. The process according to any of claims 1 to 8, wherein the common reactor wall separating the fluid paths is made up of a material selected from the group consisting of copper, silver, aluminum, magnesium, magnesium oxide, brass, carbides, in particular silicon carbides, nitrides, in particular aluminum nitride, carbon, in particular in the form of graphite or carbon nanotubes (CNTs), silicon and oxidation-resistant silicon-infiltrated silicon carbide SiSiC.

10. The process according to any of claims 1 to 9, wherein the reactor is a tube reactor or plate reactor made up of at least two parallel, superposed layers A and B, with the layer A having at least two parallel reaction channels in which the catalytic dehydration occurs and the layer B having at least two parallel channels in which the exothermic reaction occurs.

11. The process according to any of claims 1 to 10, wherein the reaction channels of the layers A have an average hydraulic diameter of from 1 to 6 mm, preferably from > 1 to 4 mm, particularly preferably from > 1 to 3 mm, and the channels of the layers B have an average hydraulic diameter of < 4 mm, preferably from 0.2 to 3 mm, particularly preferably from 0.5 to 2 mm.

12. The process according to any of claims 1 to 11, wherein the fluid path for the dehydration of formamide and the fluid path for the exothermic reaction each have a length of from 2 to 100 cm, preferably from 3 to 70 cm, particularly preferably from 6 to 40 cm.

**EP 2 262 734 B1**

**Revendications**

1. Procédé de fabrication d'acide prussique par déshydratation catalytique de formamide gazeux à des températures de 350 à 650 °C dans un réacteur, la déshydratation de formamide étant couplée avec une réaction exothermique en ce que le réacteur comprend deux voies de fluide séparées qui sont séparées par une paroi de réacteur commune, une voie de fluide étant prévue pour la déshydratation de formamide et la seconde voie de fluide étant prévue pour la réaction exothermique, et la paroi de réacteur commune étant formée en un matériau qui a une conductivité thermique spécifique λ d'au moins 10 W/(mK), **caractérisé en ce que** la réaction exothermique est une combustion catalytique de gaz combustibles avec introduction d'oxygène.

2. Procédé selon la revendication 1, **caractérisé en ce que** le côté en contact avec le gaz combustible de la paroi de réacteur commune comporte un revêtement à action catalytique.

3. Procédé selon la revendication 1 ou 2, **caractérisé en ce que** le revêtement est choisi dans le groupe constitué par les métaux nobles des groupes 8B ou 1B, les alliages contenant des métaux des groupes 8B et/ou 1B, les oxydes choisis parmi $MgO$, $CoO$, $MoO_3$, $NiO$, $ZnO$, $Cr_2O_3$, $WO_3$, $SnO$, $CuO/Cu_2O$, $MnO_2$ et $V_2O_5$, les oxydes mixtes choisis parmi $CuO\text{-}ZnO\text{-}Al_2O_3$, $CoO\text{-}MgO$, $CoO\text{-}La_2O_3$, $La_2CuO_4$, $Nd_2CuO_4$ et $Co\text{-}ZnONiO\text{-}MoO_3$, les pérovskites choisis parmi $LaMnO_3$, $CoTiO_3$, $LaTiO_3$ et $CoNiO_3$, et les spinelles choisis parmi $CuAl_2O_4$, $MgAl_2O_4$, $(Cu, Zn)Al_2O_4$, $(Cu, Zn, Ba)Al_2O_4$, $(Cu, Zn, Mg)Al_2O_2$, $(Cu, Zn, Va)Al_2O_4$ et $LaNiO_4$.

4. Procédé selon l'une quelconque des revendications 1 à 3, **caractérisé en ce que** l'oxygène est introduit dans le gaz combustible ou le gaz combustible dans l'oxygène à plusieurs emplacements le long de la voie de fluide.

5. Procédé selon l'une quelconque des revendications 1 à 4, **caractérisé en ce que** la déshydratation catalytique est réalisée à une pression de 100 mbar à 4 bar, de préférence de 300 mbar à 3 bar.

6. Procédé selon l'une quelconque des revendications 1 à 5, **caractérisé en ce que** la déshydratation catalytique a lieu à une charge longitudinale spécifique en formamide de 0,02 à 0,4 kg/(mh) dans le domaine d'écoulement laminaire.

7. Procédé selon l'une quelconque des revendications 1 à 6, **caractérisé en ce que** la déshydratation catalytique a lieu en présence d'oxygène.

8. Procédé selon l'une quelconque des revendications 1 à 7, **caractérisé en ce que** la déshydratation catalytique a lieu en présence de corps moulés, choisis parmi les corps moulés hautement frittés formés d'oxyde d'aluminium et éventuellement d'oxyde de silicium et les corps moulés de chrome-nickel-acier inoxydable, ou en présence de garnissages en acier ou oxyde de fer sur des matériaux supports poreux en tant que catalyseurs et/ou le côté en contact avec le formamide de la paroi de réacteur commune comporte un revêtement à action catalytique.

9. Procédé selon l'une quelconque des revendications 1 à 8, **caractérisé en ce que** la paroi de réacteur commune séparant les voies de fluide est formée en un matériau choisi dans le groupe constitué par le cuivre, l'argent, l'aluminium, le magnésium, l'oxyde de magnésium, le laiton, les carbures, notamment les carbures de silicium, les nitrures, notamment le nitrure d'aluminium, le carbone, notamment sous la forme de graphite ou de nanotubes de carbone (CNT), le silicium et le carbure de silicium filtré sur silicium SiSiC résistant à l'oxydation.

10. Procédé selon l'une quelconque des revendications 1 à 9, **caractérisé en ce que** le réacteur est un réacteur tubulaire ou un réacteur à plaques constitué d'au moins deux couches A et B parallèles agencées les unes sur les autres, la couche A comprenant au moins deux canaux de réaction parallèles agencés les uns à côté des autres dans lesquels la déshydratation catalytique a lieu et la couche B comprenant au moins deux canaux parallèles agencés les uns à côté des autres dans lesquels la réaction exothermique a lieu.

11. Procédé selon l'une quelconque des revendications 1 à 10, **caractérisé en ce que** les canaux de réaction des couches A présentent un diamètre hydraulique moyen de 1 à 6 mm, de préférence de > 1 à 4 mm, de manière particulièrement préférée de > 1 à 3 mm, et les canaux des couches B présentent un diamètre hydraulique moyen < 4 mm, de préférence de 0,2 à 3 mm, de manière particulièrement préférée de 0,5 à 2 mm.

12. Procédé selon l'une quelconque des revendications 1 à 11, **caractérisé en ce que** la voie de fluide pour la déshydratation de formamide et la voie de fluide pour la réaction exothermique présentent chacune une longueur de 2 à 100, de préférence de 3 à 70, de manière particulièrement préférée de 6 à 40 cm.

**Fig. 1**

**Fig. 2**

B

A

V

S

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0209039 A
- US 2042451 A
- DE 1000796 A
- WO 2004050587 A
- US 1675366 A
- EP 0967005 A2
- EP 0885653 A2
- WO 0132302 A1
- WO 0132302 A
- DE 10138553 A
- DE 102005051637 A
- DE 10132370 A
- WO 2005016512 A
- WO 2006108796 A
- EP 07120540 A

### In der Beschreibung aufgeführte Nicht-Patentliteratur

- **V. Hessel ; H. Löwe ; A. Müller ; G. Kolb.** Chemical Microprocess Engineering-Processing and Plants. Wiley-VCH, 2005, 385-391
- Microreactors. **W. Ehrfeld ; V. Hessel ; V. Haferkamp.** Ullmann's Encyclopedia of Industrial Chemistry. Wiley-VCH, 1999